(19) Europäisches Patentamt
European Patent Office
Office européen des brevets

(11) **EP 2 732 521 B1**

(12) **EUROPÄISCHE PATENTSCHRIFT**

(45) Veröffentlichungstag und Bekanntmachung des Hinweises auf die Patenterteilung:
**16.03.2016 Patentblatt 2016/11**

(51) Int Cl.:
*H02H 3/087* (2006.01)    *H02H 9/02* (2006.01)
*H01H 33/59* (2006.01)

(21) Anmeldenummer: **12751477.6**

(22) Anmeldetag: **15.08.2012**

(86) Internationale Anmeldenummer:
**PCT/EP2012/065956**

(87) Internationale Veröffentlichungsnummer:
**WO 2013/037589 (21.03.2013 Gazette 2013/12)**

(54) **GLEICHSPANNUNGS-LEITUNGSSCHUTZSCHALTER**

DIRECT CURRENT CIRCUIT BREAKER

DISJONCTEUR DE PROTECTION DE CIRCUIT À TENSION CONTINUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2011 DE 102011082568**

(43) Veröffentlichungstag der Anmeldung:
**21.05.2014 Patentblatt 2014/21**

(73) Patentinhaber: **Siemens Aktiengesellschaft 80333 München (DE)**

(72) Erfinder:
• **GAXIOLA, Enrique**
  **13090 Aix-en-Provence (FR)**
• **VOGELSANG, Jakob**
  **90765 Fürth (DE)**

(56) Entgegenhaltungen:
**EP-A1- 1 480 241     DE-A1- 2 405 835
DE-A1- 4 304 863     GB-A- 2 251 979**

EP 2 732 521 B1

**Beschreibung**

Die vorliegende Erfindung betrifft einen Gleichspannungs-Leitungsschutzschalter gemäß Patentanspruch 1, ein Verfahren zum Betreiben eines Gleichspannungs-Leitungsschutzschalters gemäß Patentanspruch 6, sowie ein Gleichstrom-Leitungsnetz gemäß Patentanspruch 7.

Elektrische Energie wird in Kraftwerken in der Regel als Dreiphasenwechselstrom erzeugt. Zur Übertragung wird diese Energie durch Leistungstransformatoren auf sehr hohe elektrische Wechselspannungen transformiert und über Freileitungen übertragen. Bei sehr langen Freileitungen ist eine Übertragung der Energie mit Gleichstrom allerdings mit geringeren Verlusten verbunden und damit günstiger.

Bei der Gleichstromübertragung bestehen im Stand der Technik allerdings Schwierigkeiten, Leistungsflüsse in vermaschten Leitungsnetzen zu steuern. Daher werden zur Gleichstromübertragung bisher fast ausschließlich Punkt-zu-Punkt-Verbindungen ohne Abzweigungen oder Maschen verwendet. Für die Zukunft ist allerdings ein Auf- und Ausbau von Gleichstrom-Leitungsnetzen geplant. Hierzu sind Gleichspannungs-Leitungsschutzschalter erforderlich, um die Verfügbarkeit der geplanten Gleichstrom-Leitungsnetze zu erhöhen. Gleichspannungs-Leitungsschutzschalter dienen dazu, im Fehlerfall Teile eines Leitungsnetzes selektiv abzuschalten und dadurch einen Ausfall des gesamten Leitungsnetzes zu verhindern.

Leitungsschutzschalter sind beispielsweise aus der GB 2 251 979 A, der DE 43 04 863 A1 und der DE 24 05 835 A1 bekannt. Bei der GB 2 251 979 A ist eine Kommutatoreinrichtung parallel zu einem Unterbrecher geschaltet. Die DE 43 04 863 A1 zeigt einen Schalter mit zwei Unterbrechern, bei dem eine Kommutatoreinrichtung und ein Energieabsorber parallel zu einem der Unterbrecher geschaltet sind. Bei der DE 24 05 835 A1 ist ein Aufbau mit einer Mehrzahl von Unterbrechern offenbart.

Die Aufgabe der vorliegenden Erfindung ist es, einen verbesserten Gleichspannungs-Leitungsschutzschalter bereitzustellen. Diese Aufgabe wird durch einen Gleichspannungs-Leitungsschutzschalter mit den Merkmalen des Patentanspruchs 1 gelöst. Es ist weiter Aufgabe der vorliegenden Erfindung, ein Verfahren zum Betreiben eines Gleichspannungs-Leitungsschutzschalters anzugeben. Diese Aufgabe wird durch ein Verfahren mit den Merkmalen des Patentanspruchs 6 gelöst. Es ist weiter Aufgabe der vorliegenden Erfindung, ein ausfallsichereres Gleichstrom-Leitungsnetz bereitzustellen. Diese Aufgabe wird durch ein Gleichstrom-Leitungsnetz mit den Merkmalen des Patentanspruchs 7 gelöst. Bevorzugte Weiterbildungen sind in den abhängigen Ansprüchen angegeben.

Der erfindungsgemäße Gleichspannungs-Leitungsschutzschalter weist einen ersten bis fünften Knoten auf, wobei

- zwischen dem ersten Knoten und dem vierten Knoten ein erster Unterbrecher angeordnet ist,
- zwischen dem vierten Knoten und dem dritten Knoten ein zweiter Unterbrecher angeordnet ist,
- zwischen dem vierten Knoten und dem fünften Knoten eine Parallelschaltung einer Kommutatoreinrichtung zu einem Energieabsorber angeordnet ist und in Serie dazu ein Schalter angeordnet ist,
- zwischen dem zweiten Knoten und dem dritten Knoten eine Serienschaltung aus einem Halbleiterschalter und einem Widerstand angeordnet ist. Der Halbleiterschalter ist bevorzugt ein Thyristor.

Dabei kann zwischen dem ersten Knoten und dem zweiten Knoten eine erste Gleichspannung angelegt und zwischen dem dritten Knoten und dem zweiten Knoten eine zweite Gleichspannung abgegriffen werden. Die Kommutatoreinrichtung weist bevorzugt eine Reihenschaltung eines Kommutatorwiderstands, einer Kommutatorspule und eines Kommutatorkondensators auf.

Bevorzugt umfasst der Gleichspannungs-Leitungsschutzschalter eine Steuerungseinrichtung, die ausgestaltet ist, im Falle einer Abschaltung folgende Schritte vorzunehmen:

- Schließen des Schalters (190);
- Öffnen des zweiten Unterbrechers (120);
- Anschalten des Thyristors (260);
- Öffnen des ersten Unterbrechers (110).

Für die Erfindung wurde erkannt, dass der zusätzliche Thyristorzweig bei geeigneter Ansteuerung erlaubt, einen Stromnulldurchgang sehr schnell zu erzwingen. Dieser erzwungene Nulldurchgang erlaubt vorteilhafterweise ein Auftrennen der durch den Gleichspannungs-Leitungsschutzschalter gesicherten Leitung, ohne dass extreme Einschwingspannungen auftreten. Dies ermöglicht vorteilhafterweise eine sehr kompakte und kostengünstige Ausführung des Gleichspannungs-Leitungsschutzschalters und verkürzt die maximal notwendige Zeit zur vollständigen Stromunterbrechung und selektiven Abschaltung eines Teils eines Leitungsnetzes.

Bevorzugt ist der zweite Unterbrecher ein hybrider Unterbrecher. In einer bevorzugten Ausführungsform des Gleichspannungs-Leitungsschutzschalters ist der erste Unterbrecher ein SF6-Unterbrecher. Vorteilhafterweise eignen sich SF6-Unterbrecher zum Unterbrechen sehr großer Spannungen. Bevorzugt ist der zweite Unterbrecher ein Vakuum-Unterbrecher. Vorteilhafterweise eignen sich Vakuum-Unterbrecher für große Schalthäufigkeiten und sind weitgehend wartungsfrei.

Ein erfindungsgemäßes Verfahren zum Betreiben eines Gleichspannungs-Leitungsschutzschalters, der auf die oben genannte Weise ausgebildet ist, beginnt in einem Zustand, in dem der Schalter geöffnet ist, und weist Schritte auf zum Detektieren eines Anstiegs einer Stromstärke eines im Gleichspannungs-Leitungsschutzschalter fließenden elektrischen Stroms, zum Schließen des Schalters und zum Öffnen des zweiten Unterbrechers. Weitere Schritte umfassen das Anschalten des Halbleiterschalters, beispielsweise des Thyristors und das Öffnen des ersten Unterbrechers. Vorteilhafterweise erlaubt dieses Verfahren eine physikalische Unterbrechung eines Leitungsnetzes mit einem Energieniveau von bis zu 20 MJ in einem Zeitraum von etwa 10 ms. Dies entspricht vorteilhafterweise der bisherigen Praxis in Wechselstrom-Leitungsnetzen.

Ein erfindungsgemäßes Gleichstrom-Leitungsnetz weist einen Gleichspannungs-Leitungsschutzschalter der vorgenannten Art auf. Vorteilhafterweise können bei diesem Gleichstrom-Leitungsnetz Teile des Leitungsnetzes im Fehlerfall selektiv abgeschaltet werden, ohne dass dies einen Ausfall des gesamten Gleichstrom-Leitungsnetzes zur Folge hat.

Dabei ist der Gleichspannungs-Leitungsschutzschalter im Gleichstrom-Leitungsnetz bevorzugt so angeordnet, dass der erste Knoten eine Eingangsseite in Verbindung mit einem Pol einer Gleichspannungsquelle darstellt und der zweite Knoten mit dem anderen Pol der Gleichspannungsquelle verbunden ist.

In einer bevorzugten Ausführungsform des Gleichstrom-Leitungsnetzes weist dieses mindestens eine Masche auf. Vorteilhafterweise erlaubt der im Gleichstrom-Leitungsnetz eingesetzte Gleichspannungs-Leitungsschutzschalter eine vermaschte Ausgestaltung des Gleichstrom-Leitungsnetzes.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Dabei zeigen:

Figur 1 eine Schaltungsanordnung eines Gleichspannungs-Leitungsschutzschalters;

Figur 2 ein Diagramm zum Quellstromverlauf der Schaltungsanordnung im Vergleich zu einer bekannten Schaltungsanordnung;

Figur 3 ein Diagramm zum Leitungsstromverlauf der Schaltungsanordnung im Vergleich zu einer bekannten Schaltungsanordnung; und

Figur 4 ein Diagramm zum Spannungsverlauf der Unterbrecher der Schaltungsanordnung.

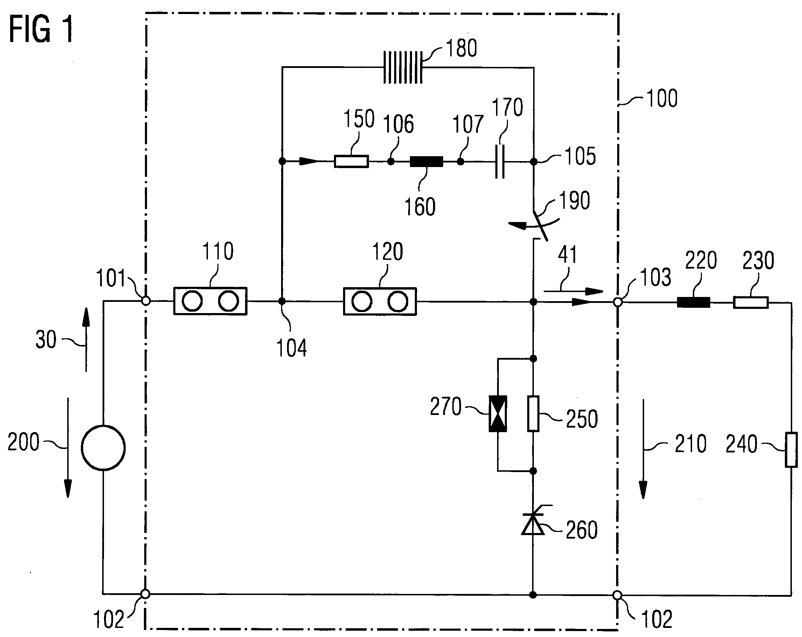

Figur 1 zeigt eine Schaltungsanordnung eines Gleichspannungs-Leitungsschutzschalters 100. Der Gleichspannungs-Leitungsschutzschalter kann in einem Gleichstrom-Leitungsnetz integriert werden, um im Falle eines Kurzschlusses einen Teil des Gleichstrom-Leitungsnetzes selektiv abzuschalten. Der Gleichspannungs-Leitungsschutzschalter 100 kann beispielsweise zur Verwendung in einem Hochspannungs-Gleichstrom-Leitungsnetz vorgesehen sein. Der Gleichspannungs-Leitungsschutzschalter 100 ermöglicht in einem Gleichstrom-Leitungsnetz einen Schutz der positiven Phase gegen das Erdpotential, der negativen Phase gegen das Erdpotential und der positiven Phase gegen die negative Phase.

Der Gleichspannungs-Leitungsschutzschalter 100 weist einen ersten bis siebten Knoten 101...107 auf. Die Knoten 101...107 sind Schaltungsknoten des Gleichspannungs-Leitungsschutzschalters 100, die sich jeweils auf einem elektrischen Potential befinden. Die Knoten 101...107 können demnach jeweils auch elektrische Leiterabschnitte umfassen, sofern die elektrischen Widerstände dieser Leiterabschnitte vernachlässigbar sind.

Zwischen dem ersten Knoten 101 und dem zweiten Knoten 102 des Gleichspannungs-Leitungsschutzschalters 100 kann eine Gleichspannung 200 angelegt werden. Die Gleichspannung 200 kann eine Quellenspannung sein, die durch einen Hochspannungsgleichrichter an ein Gleichstrom-Leitungsnetz angelegt wird. Der erste Knoten 101 und der zweite Knoten 102 bilden in diesem Fall eine Eingangsseite des Gleichspannungs-Leitungsschutzschalters 100 und des an den Gleichspannungs-Leitungsschutzschalter 100 anschließenden Gleichstrom-Leitungsnetzes. Die zwischen dem ersten Knoten 101 und dem zweiten Knoten 102 angelegte Gleichspannung 200 kann beispielsweise 500 kV betragen. Die Gleichspannung 200 kann jedoch auch höhere Spannungswerte von mehr als 1200 kV annehmen. Die Gleichspannung 200 kann in dem Gleichstrom-Leitungsnetz, in dem der Gleichspannungs-Leitungsschutzschalter 100 verwendet wird, einen Gleichstrom von 20 kA oder mehr anregen.

Zwischen dem dritten Knoten 103 und dem zweiten Knoten 102 des Gleichspannungs-Leitungsschutzschalters 100 kann eine Ausgangsspannung 210 abgegriffen werden. Die Ausgangsspannung 210 ist eine Gleichspannung und entspricht im Wesentlichen der zwischen dem ersten Knoten 101 und dem zweiten Knoten 102 angelegten Gleichspannung 200. Im Falle eines Kurzschlusses kann der Gleichspannungs-Leitungsschutzschalter 100 die Verbindung zwischen dem ersten Knoten 101 und dem dritten Knoten 103 jedoch auftrennen, so dass die Ausgangsspannung 210 nicht mehr der Gleichspannung 200 entspricht.

An dem dritten Knoten 103 und dem zweiten Knoten 102 können sich Leitungsteile des Gleichstrom-Leitungsnetzes anschließen, in dem der Gleichspannungs-Leitungsschutzschalter 100 verwendet wird. Diese Teile des Gleichstrom-Leitungsnetzes sind in Figur 1 schematisch durch eine Leitungsimpedanz 220, einen Leitungswiderstand 230 und einen Lastwiderstand 240 dargestellt.

Zwischen dem ersten Knoten 101 und dem vierten Knoten 104 ist ein Hilfs-Unterbrecher 110 angeordnet. Der Hilfs-Unterbrecher 110 dient dazu, im Falle eines Kurzschlusses eine elektrische Verbindung zwischen dem ersten Knoten 101 und dem vierten Knoten 104 aufzutrennen.

Zwischen dem vierten Knoten 104 und dem dritten Knoten 103 weist der Gleichspannungs-Leitungsschutzschalter 100 einen hybriden Unterbrecher 120 auf. Der hybride Unterbrecher 120 dient dazu, im Falle eines Kurzschlusses die elektrische Verbindung zwischen dem vierten Knoten 104 und dem dritten Knoten 103 aufzutrennen.

Der Hilfs-Unterbrecher 110 und der hybride Unterbrecher 120 können die elektrische Verbindung zwischen dem ersten Knoten 101 und dem dritten Knoten 103 nur auftrennen, wenn ein zwischen dem ersten Knoten 101 und dem dritten Knoten 103 fließender elektrischer Strom klein ist, sich also dem Wert 0 annähert. Andernfalls kommt es während des Auftrennens der Verbindung zwischen dem ersten Knoten 101 und dem dritten Knoten 103 zur nichtlöschbaren Ausbildung von Lichtbögen, die den Hilfs-Unterbrecher 110, den hybriden Unterbrecher 120, den gesamten Gleichspannungs-Leitungsschutzschalter 100 oder auch weitere Teile eines Gleichstrom-Leitungsnetzes beschädigen oder zerstören können. Somit muss im Falle eines Kurzschlusses der zwischen dem ersten Knoten 101 und dem dritten Knoten 103 fließende elektrische Strom binnen kürzester Zeit auf 0 abgesenkt werden, damit der Hilfs-Unterbrecher 110 und der hybride Unterbrecher 120 die elektrische Verbindung zwischen dem ersten Knoten 101 und dem dritten Knoten 103 unterbrechen können. Hierzu weist der Gleichspannungs-Leitungsschutzschalter 100 eine Kommutatorschaltung auf, die zwischen dem vierten Knoten 104 und dem fünften Knoten 105 angeordnet ist.

Die Kommutatorschaltung des Gleichspannungs-Leitungsschutzschalters 100 umfasst einen Kommutatorwiderstand 150, eine Kommutatorspule 160 und einen Kommutatorkondensator 170. Der Kommutatorwiderstand 150 ist zwischen dem ersten Knoten 101 und dem sechsten Knoten 106 angeordnet. Die Kommutatorspule 160 ist zwischen dem sechsten Knoten 106 und dem siebten Knoten 107 angeordnet. Der Kommutatorkondensator 170 ist zwischen dem siebten Knoten 107 und dem fünften Knoten 105 angeordnet. Es wäre jedoch auch möglich, die Reihenfolge von Kommutatorwiderstand 150, Kommutatorspule 160 und Kommutatorkondensator 170 zu ändern. Wesentlich ist lediglich, dass der Kommutatorwiderstand 150, die Kommutatorspule 160 und der Kommutatorkondensator 170 eine Reihenschaltung bilden und zwischen dem ersten Knoten 101 und dem fünften Knoten 105 angeordnet sind.

Die Kommutatorschaltung dient dazu, einen elektrischen Gegenstrom durch den Vakuumunterbrecher 120 zu erzeugen, der dem gewöhnlichen Stromfluss durch den Hilfs-Unterbrecher 110 und den hybriden Unterbrecher 120 entgegen gerichtet ist und diesen kompensiert. Auf diese Weise bewirkt die Kommutatorschaltung einen Nulldurchgang des Stromflusses durch den Hilfs-Unterbrecher 110 und den hybriden Unterbrecher 120, der es dem Hilfs-Unterbrecher 110 und dem hybriden Unterbrecher 120 ermöglicht, die elektrische Verbindung zwischen dem ersten Knoten 101 und dem dritten Knoten 103 zu unterbrechen.

Zwischen dem fünften Knoten 105 und dem dritten Knoten 103 ist ein Schalter 190 angeordnet. Der Schalter 190 kann ein Halbleiterschalter sein, beispielsweise ein Bipolartransistor mit isolierter Gate-Elektrode (IGBT) oder ein Thyristor (three terminal Semi-Conductor Rectifier, SCR). Ist der Schalter 190 geschlossen, also leitend, so ist die aus Kommutatorwiderstand 150, Kommutatorspule 160 und Kommutatorkondensator 170 gebildete Kommutatorschaltung dem hybriden Unterbrecher 120 parallel geschaltet.

Der Gleichspannungs-Leitungsschutzschalter 100 weist ferner einen Energieabsorber 180 auf, der zwischen dem vierten Knoten 104 und dem fünften Knoten 105 angeordnet ist. Der Energieabsorber 180 ist somit der Kommutatorschaltung parallel geschaltet. Der Energieabsorber 180 dient dazu, die im Fall eines Kurzschlusses und einer durch den Gleichspannungs-Leitungsschutzschalter 100 bewirkten Unterbrechung freiwerdende Energie zu absorbieren. Der Energieabsorber 180 kann beispielsweise einen ZnO-Varistorstapel umfassen.

Der durch die aus Kommutatorwiderstand 150, Kommutatorspule 160 und Kommutatorkondensator 170 gebildete Kommutatorschaltung generierte Gegenstrom kann über die Größe des Kommutatorwiderstands 150 und des Kommutatorkondensators 170 festgelegt werden. Es gilt:

$$L_{Com} = \frac{U_{C_{Com}}}{di(t)/dt}$$

und

$$C_{Com} = \frac{I_{Com}}{U_{C_{Com}}} L_{Com}$$

Die Gleichspannung 200 kann beispielsweise 500 kV betragen. Ein am ersten Knoten 101 des Gleichspannungs-Leitungsschutzschalters 100 in den Gleichspannungs-Leitungsschutzschalter 100 fließender Strom kann beispielsweise eine Stromstärke von 20 kA aufweisen.

Zwischen dem dritten Knoten 103 und dem zweiten Knoten 102 ist bei dem vorliegenden Gleichspannungs-Leitungsschutzschalter 100 eine Thyristor-Serienschaltung aus einem Thyristor 260 und einem Widerstand 250 angeordnet. Dem Widerstand 250 ist wiederum ein nichtlinearer Energieabsorber 270 parallel geschaltet.

Im gewöhnlichen Betrieb des Gleichspannungs-Leitungsschutzschalters 100 ist der Schalter 190 des Gleichspannungs-Leitungsschutzschalters 100 geöffnet. Stromfluss zwischen dem ersten Knoten 101 und dem dritten Knoten 103 ist über den Hilfs-Unterbrecher 110 und den hybriden Unterbrecher 120 möglich. Kommt es im Gleichstrom-Leitungsnetz, in dem der Gleichspannungs-Leitungsschutzschalter 100 verwendet wird, zu einem Kurzschluss, so steigt der durch den Gleichspannungs-Leitungsschutzschalter 100 fließende elektrische Strom stark an. Dies wird durch eine in Figur 1 nicht dargestellte Detektionsvorrichtung detektiert. Wird ein übermäßiger Anstieg des im Gleichspannungs-Leitungsschutzschalter 100 fließenden elektrischen Stroms erkannt, so wird eine Abschaltung unternommen.

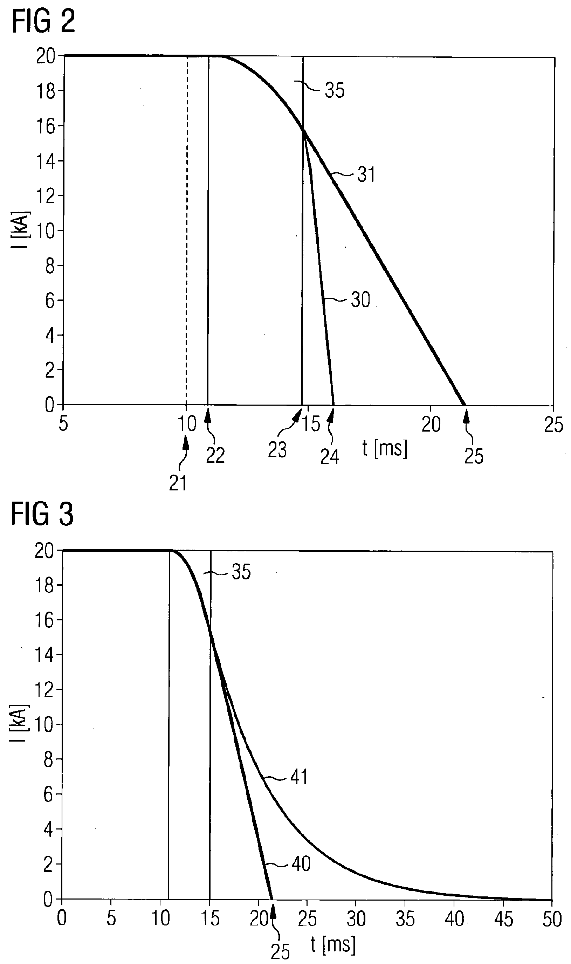

Figur 2 zeigt einen ersten Quell-Stromverlauf 31 der Gleichspannungsquelle, wenn keine Thyristor-Serienschaltung verwendet wird, und im Vergleich dazu einen zweiten Quell-Stromverlauf 30, wie er sich bei der Abschaltung durch den Gleichspannungs-Leitungsschutzschalters 100 ergibt. Dabei sind ein erster bis fünfter Zeitpunkt 21...25 markiert.

Wird ein übermäßiger Anstieg des im Gleichspannungs-Leitungsschutzschalter 100 fließenden elektrischen Stroms erkannt, so wird in einem ersten Schritt zum ersten Zeitpunkt 21 von ca. 10 ms nach dem Erkennen des Kurzschlusses der Schalter 190 geschlossen, so dass eine leitende Verbindung zwischen dem fünften Knoten 105 und dem dritten Knoten 103 des Gleichspannungs-Leitungsschutzschalters 100 besteht.

In der Folge kommt es zu einem Stromfluss zwischen dem ersten Knoten 101 und dem dritten Knoten 103 über die aus Kommutatorwiderstand 150, Kommutatorspule 160 und Kommutatorkondensator 170 gebildete Kommutatorschaltung. Dieser Stromfluss gleicht einen Stromfluss über den Hilfs-Unterbrecher 110 und den hybriden Unterbrecher 120 aus, so dass der über den Hilfs-Unterbrecher 110 und den hybriden Unterbrecher 120 fließende elektrische Strom auf den Wert null zurückgeht.

Zu diesem Zeitpunkt unterbrechen der Hilfs-Unterbrecher 110 und der hybride Unterbrecher 120 die elektrisch leitende Verbindung zwischen dem ersten Knoten 101 und dem dritten Knoten 103. Durch Induktivitäten in dem Gleichspannungs-Leitungsschutzschalter 100 nachfolgenden Teilen des Gleichstrom-Leitungsnetzes, die in Figur 1 durch die Leitungsimpedanz 220 repräsentiert sind, wird der am dritten Knoten 103 fließende elektrische Strom jedoch noch aufrechterhalten und die im Gleichstrom-Leitungsnetz gespeicherte elektrische Energie wird frei. Diese elektrische Energie wird durch den Energieabsorber 180 absorbiert, ohne dass der Gleichspannungs-Leitungsschutzschalter 100 oder andere Teile des Gleichstrom-Leitungsnetzes beschädigt werden.

In einem zweiten Schritt wird zum zweiten Zeitpunkt 22, zu dem der Strom durch den hybriden Unterbrecher 120 weitgehend ausgelöscht ist, der hybride Unterbrecher 120 geöffnet und somit der Strom hier temporär unterbrochen. Der Strom kommutiert in der Folge im mit 35 bezeichneten Zeitraum in die Kommutatorschaltung. Wegen der großen induktiv gespeicherten Energie im Netzwerk wird dabei der Kommutatorkondensator 170 bis zu umgekehrter Polarität geladen, sodass die am Thyristor 260 anliegende Spannung positiv wird.

Zum dritten Zeitpunkt 23 wird nun der Thyristor 260 eingeschaltet. Daraus resultierend kommutiert nun der Strom zunehmend in die Thyristor-Serienschaltung. Der Spannungsabfall über den Widerstand 250 steigt hierdurch an. Dadurch wiederum wird die Spannung am Hilfs-Unterbrecher 110 zu Null. Dies führt dazu, dass der Quellstrom 30 bereits beim vierten Zeitpunkt, im vorliegenden Beispiel bei ca. 16 ms, zu Null wird, während beim ersten Quell-Stromverlauf 31 der Strom erst beim fünften Zeitpunkt 25 von ca. 21,2 ms Null erreicht.

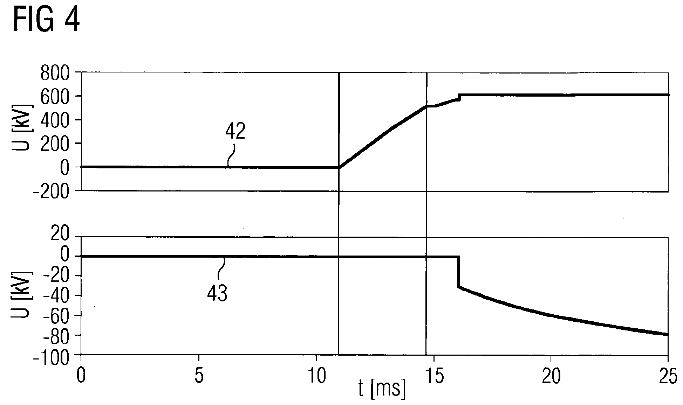

Figur 3 ist ein Diagramm des zeitlichen Verlaufs des zugehörigen ersten Laststroms 40 ohne Thyristor-Serienschaltung und zweiten Laststroms 41 mit Thyristor-Serienschaltung. Figur 4 zeigt, aufgetragen in Spannungen von kV gegen Zeiten von ms, den Spannungsverlauf 42 über den hybriden Unterbrecher 120 und den Spannungsverlauf 43 über den Hilfsunterbrecher 110.

Der Gleichspannungs-Leitungsschutzschalter 100 ermöglicht eine physikalische Trennung in einem Gleichstrom-Leitungsnetz bei Energien von bis zu 20 MJ in einer Zeit in der Größenordnung von 10 ms. Dabei ist die Isolationszeit gegenüber einem Schalter ohne den Thyristorzweig um ca. 14% gesenkt. Dies entspricht dem bei Wechselspannungs-Leitungsnetzen Üblichen. Der Gleichspannungs-Leitungsschutzschalter 100 erlaubt die Verwendung von Gleichstrom-Leitungsnetzen mit Maschen, also von Gleichstrom-Leitungsnetzen, die nicht lediglich eine Punkt-zu-Punkt-Verbindung umfassen. Der Gleichspannungs-Leitungsschutzschalter 100 ist besonders vorteilhaft für die Verwendung in Multi-Terminal-Off-Shore-Hochspannungs-Einspeisepunkten, die erneuerbare Energiequellen nutzen. Der Gleichspannungs-Leitungsschutzschalter 100 kann beispielsweise in Kombination mit Windkraftanlagen verwendet werden.

Ein weiterer Vorteil des beschriebenen Leistungsschutzschalters besteht darin, dass der Energieabsorber kleiner ausfallen kann, da die Energie im zusätzlichen Thyristorzweig abgebaut wird.

**Patentansprüche**

1. Gleichspannungs-Leitungsschutzschalter (100) mit einem ersten Knoten (101), einem zweiten Knoten (102), einem dritten Knoten (103), einem vierten Knoten (104) und einem fünften Knoten (105), wobei

   - erster und zweiter Knoten (101, 102) Eingangsanschlüsse darstellen,
   - zweiter und dritter Knoten (102, 103) Ausgangsanschlüsse darstellen,
   - zwischen dem ersten Knoten (101) und dem vierten Knoten (104) ein erster Unterbrecher (110) angeordnet ist,

- zwischen dem vierten Knoten (104) und dem dritten Knoten (103) ein zweiter Unterbrecher (120) angeordnet ist,

- zwischen dem vierten Knoten (101) und dem fünften Knoten (105) eine Parallelschaltung einer Kommutatoreinrichtung zu einem Energieabsorber (180) angeordnet ist,

- zwischen dem zweiten Knoten (102) und dem dritten Knoten (103) eine Serienschaltung aus einem Halbleiterschalter und einem Widerstand (250) angeordnet ist,

- zwischen dem dritten Knoten (103) und dem fünften Knoten (105) ein Schalter (190) angeordnet ist.

**2.** Gleichspannungs-Leitungsschutzschalter (100) gemäß Anspruch 1, bei dem der Halbleiterschalter ein Thyristor (260) ist.

**3.** Gleichspannungs-Leitungsschutzschalter (100) gemäß Anspruch 1 oder 2, bei dem die Kommutatoreinrichtung eine Reihenschaltung eines Kommutatorwiderstands (150), einer Kommutatorspule (160) und eines Kommutatorkondensators (170) umfasst.

**4.** Gleichspannungs-Leitungsschutzschalter (100) gemäß einem der vorhergehenden Ansprüche, wobei der erste Unterbrecher (110) ein SF6-Unterbrecher ist.

**5.** Gleichspannungs-Leitungsschutzschalter (100) gemäß einem der vorhergehenden Ansprüche, wobei der zweite Unterbrecher (120) ein Vakuum-Unterbrecher ist.

**6.** Verfahren zum Betreiben eines Gleichspannungs-Leitungsschutzschalter (100) gemäß einem der vorangehenden Ansprüche, wobei der Schalter (190) zu Beginn des Verfahrens geöffnet ist, wobei das Verfahren die folgenden Schritte aufweist:

- Detektieren eines Anstiegs einer Stromstärke eines im Gleichspannungs-Leitungsschutzschalter (100) fließenden elektrischen Stroms;
- Schließen des Schalters (190);
- Öffnen des zweiten Unterbrechers (120);
- Anschalten des Thyristors (260);
- Öffnen des ersten Unterbrechers (110).

**7.** Gleichstrom-Leitungsnetz mit einem Gleichspannungs-Leitungsschutzschalter (100) gemäß einem der Ansprüche 1 bis 5.

**8.** Gleichstrom-Leitungsnetz gemäß Anspruch 7, wobei das Gleichstrom-Leitungsnetz eine Masche aufweist.

**Claims**

**1.** DC voltage line circuit breaker (100) comprising a first node (101), a second node (102), a third node (103), a fourth node (104) and a fifth node (105), wherein

- first and second nodes (101, 102) represent input terminals,
- second and third nodes (102, 103) represent output terminals,
- a first interrupter (110) is arranged between the first node (101) and the fourth node (104),
- a second interrupter (120) is arranged between the fourth node (104) and the third node (103),
- a parallel circuit comprising a commutator device and an energy absorber (180) is arranged between the fourth node (101) and the fifth node (105),
- a series circuit comprising a semiconductor switch and a resistor (250) is arranged between the second node (102) and the third node (103),
- a switch (190) is arranged between the third node (103) and the fifth node (105).

**2.** DC voltage line circuit breaker (100) according to Claim 1, in which the semiconductor switch is a thyristor (260).

**3.** DC voltage line circuit breaker (100) according to Claim 1 or 2, in which the commutator device comprises a series circuit comprising a commutator resistor (150), a commutator coil (160) and a commutator capacitor (170).

**4.** DC voltage line circuit breaker (100) according to one of the preceding claims, wherein the first interrupter (110) is an SF6 interrupter.

**5.** DC voltage line circuit breaker (100) according to one of the preceding claims, wherein the second interrupter (120) is a vacuum interrupter.

**6.** Method for operating a DC voltage line circuit breaker (100) according to one of the preceding claims, wherein the switch (190) is open at the beginning of the method, wherein the method comprises the following steps:

- detecting a rise in a current intensity of an electrical current flowing in the DC voltage line circuit breaker (100);
- closing the switch (190);
- opening the second interrupter (120);
- switching on the thyristor (260);
- opening the first interrupter (110).

**7.** DC line system comprising a DC voltage line circuit breaker (100) according to one of Claims 1 to 5.

8. DC line system according to Claim 7, wherein the DC line system has a mesh.

**Revendications**

1. Disjoncteur ( 100 ) de protection de circuit à tension continue, ayant un premier noeud ( 101 ), un deuxième noeud ( 102 ), un troisième noeud ( 130 ), un quatrième noeud ( 104 ) et un cinquième noeud ( 105 ), dans lequel

   - les premier et deuxième noeuds ( 101, 102 ) représentent des bornes d'entrée,
   - les deuxième et troisième noeuds ( 102, 103 ) représentent des bornes de sortie,
   - un premier dispositif d'interruption ( 110 ) est monté entre le premier noeud ( 101 ) et le quatrième noeud ( 104 ),
   - un deuxième dispositif d'interruption ( 120 ) est monté entre le quatrième noeud ( 104 ) et le troisième noeud ( 103 ),
   - un circuit d'un dispositif de commutateur est monté en parallèle à un absorbeur ( 180 ) d'énergie entre le quatrième noeud ( 101 ) et le cinquième noeud ( 105 ),
   - un circuit série, composé d'un interrupteur à semiconducteur et d'une résistance ( 250 ), est monté entre le deuxième noeud ( 102 ) et le troisième noeud ( 103 ),
   - un interrupteur ( 190 ) est monté entre le troisième noeud ( 103 ) et le cinquième noeud ( 105 ).

2. Disjoncteur ( 100 ) de protection de circuit à tension continue suivant la revendication 1, dans lequel l'interrupteur à semiconducteur est un thyristor ( 260 ).

3. Disjoncteur ( 100 ) de protection de circuit à tension continue suivant la revendication 1 ou 2, dans lequel le dispositif de commutateur comprend un circuit série, composé d'une résistance ( 150 ) de commutateur, d'une bobine ( 160 ) de commutateur et d'un condensateur ( 170 ) de commutateur.

4. Disjoncteur ( 100 ) de protection de circuit à tension continue suivant l'une des revendications précédentes, dans lequel le premier dispositif d'interruption ( 110 ) est un dispositif d'interruption à SF6.

5. Disjoncteur ( 100 ) de protection de circuit à tension continue suivant l'une des revendications précédentes, dans lequel le deuxième dispositif d'interruption ( 120 ) est un dispositif d'interruption à vide.

6. Procédé pour faire fonctionner un disjoncteur ( 100 ) de protection de circuit à tension continue suivant l'une des revendications précédentes, dans lequel l'interrupteur ( 190 ) est ouvert au début du procédé, procédé dans lequel on effectue les stades suivants :

   - on détecte une élévation de l'intensité du courant électrique passant dans le disjoncteur ( 100 ) de protection de circuit à tension continue,
   - on ferme l'interrupteur ( 190 ),
   - on ouvre le deuxième dispositif d'interruption ( 120 ),
   - on met le thyristor ( 260 ) à l'état passant,
   - on ouvre le premier dispositif d'interruption ( 110 ).

7. Réseau de ligne à tension continue ayant un disjoncteur ( 100 ) de protection de circuit à tension continue suivant l'une des revendications 1 à 5.

8. Réseau de ligne à tension continue suivant la revendication 7, dans lequel le réseau de ligne à tension continue comporte une maille.

FIG 1

EP 2 732 521 B1

FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2251979 A
- DE 4304863 A1
- DE 2405835 A1